# EUROPÄISCHE PATENTSCHRIFT

(11) **EP 3 145 321 B1**
(45) Veröffentlichungstag und Bekanntmachung des Hinweises auf die Patenterteilung: **26.06.2019**
(21) Anmeldenummer: 15723510.2
(22) Anmeldetag: 19.05.2015
(51) Int. Cl.: A23K 10/00, A23K 10/10, A23K 10/40, A23K 50/00

(54) **VERFAHREN ZUR HERSTELLUNG EINES ÜBERWIEGEND FLEISCHBASIERTEN FUTTERMITTELPRODUKTS UND ENTSPRECHENDES FUTTERMITTELPRODUKT FÜR FLEISCHFRESSENDE TIERE**
METHOD FOR PRODUCING A PREDOMINANTLY MEAT-BASED ANIMAL FEED PRODUCT AND CORRESPONDING ANIMAL FEED PRODUCT FOR CARNIVOROUS ANIMALS
PROCÉDÉ DE FABRICATION D'UN ALIMENT POUR ANIMAUX PRINCIPALEMENT À BASE DE VIANDE ET ALIMENT CORRESPONDANT POUR CARNASSIERS

(30) Priorität: 19.05.2014 DE 102014107058
(43) Veröffentlichungstag der Anmeldung: 29.03.2017
(73) Patentinhaber: Deuerer, Hans-Jürgen, 75015 Bretten (DE)
(72) Erfinder: Deuerer, Hans-Jürgen, 75015 Bretten (DE)
(74) Vertreter: Gramm, Lins & Partner Patent- und Rechtsanwälte PartGmbB
(86) Internationale Anmeldenummer: PCT/EP2015/060977
(87) Internationale Veröffentlichungsnummer: WO 2015/177134

(56) Entgegenhaltungen:
- DE-A1- 2 543 402
- DE-A1-102006 031 794
- DE-A1-102012 211 766
- US-A- 4 842 885
- US-A- 5 922 692
- US-A1- 2011 217 419
- US-B1- 6 465 037

## Beschreibung

Die Erfindung betrifft ein Verfahren zur Herstellung eines überwiegend fleischbasierten Futtermittelprodukts. Des Weiteren betrifft die Erfindung ein überwiegend fleischbasiertes Futtermittelprodukt erhältlich durch das erfindungsgemäße Verfahren sowie die Verwendung des erfindungsgemäßen überwiegend fleischbasierten Futtermittelprodukts als Futter für fleischfressende Tiere.

Fleischfresser wie Hund und Katze, die als Haustiere gehalten werden, werden häufig nicht artgerecht ernährt.

In der Natur ernähren sich diese Tierarten hauptsächlich von Beutetieren, also durch die Aufnahme tierischer Proteine in Form von Fleisch.

Es ist ernährungsphysiologisch sinnvoll, bei der Bereitstellung von Futtermitteln für fleischfressende Tiere einen hohen Proteingehalt bei gleichzeitig niedrigem Kohlenhydratgehalt vorzusehen.

Neben dem als Hauptmahlzeit verfütterten Hauptfutter in Form von Trocken-, Halbfeucht- oder Feuchtfutter werden zunehmend auch Snacks - beispielsweise Drops - vom Verbraucher nachgefragt, die sogar für besondere Funktionen wie zur Gebisspflege beziehungsweise zu Erziehungs- und Ausbildungszwecken, eingesetzt werden sollen.

Die bisher im Stand der Technik als Drops bekannten bissengroße Futtermittel für Hunde bzw. für Nager bestehen fast ausschließlich aus Getreide, Gemüse, Ölen und Fetten - beispielsweise "Drops Käsegeschmack" - und nur im Fall einer für Hunde angebotenen Varietät "Drops-Leberwurstgeschmack" zu einem geringen Anteil aus Fleisch und tierischen Nebenerzeugnissen.

US2011/217418 und DE102006031794 offenbaren die Herstellung von Futtermitteln

Fleischfresser, die nicht artgerecht ernährt werden, haben unter anderem eine erhöhte Anfälligkeit für Stoffwechselerkrankungen. Entsprechend ist es wünschenswert, ein ernährungsphysiologisch geeignetes Futtermittel bereitzustellen, das von Fleischfressern in verschiedenen Darreichungsformen gut akzeptiert wird.

Gelöst wird die Aufgabe durch ein Verfahren zur Herstellung eines überwiegend fleischbasierten Futtermittelprodukts wobei
a. ein Kutter zur Herstellung eines Futtermittel-Vorprodukts mit wenigstens folgenden Zutaten beschickt wird, die eine Temperatur aufweisen, die gleich oder geringer ist als +25°C: wenigstens ein Bestandteil der Gruppe Fleisch,
b. die Zutaten zu einem Futtermittel-Vorprodukt mit einem Feuchtigkeits-Gehalt zwischen 30 Gew.-% und 60 Gew.-% gekuttert werden,
c. gegebenenfalls das Futtermittel-Vorprodukt ausgeformt wird, gegebenenfalls durch Extrusion,
d. gegebenenfalls das gegebenenfalls ausgeformte Futtermittel-Vorprodukt getrocknet wird, bis ein Feuchtigkeitsgehalt zwischen 5 Gew.-% und 40 Gew.-% erreicht ist,
e. das gegebenenfalls getrocknete Futtermittel-Vorprodukt zu Partikeln mit einer Größe zwischen 0,5 mm und 8 mm zerkleinert wird,
f. und die Partikel des gegebenenfalls getrockneten Futtermittel-Vorprodukts zu einer Futtermittelmasse conchiert werden, gegebenenfalls mit einem oder mehreren Bestandteilen der Gruppe Käse, Molkepulver, Sahnepulver, Leberwurst und/oder Fett,
g. die Futtermittelmasse zum überwiegend fleischbasierten Futtermittel-Produkt ausgeformt und gegebenenfalls auf eine Temperatur zwischen 1°C und 25°C abgekühlt wird.

Durch das erfindungsgemäße Verfahren wird ein Futtermittelprodukt bereitgestellt, das sich durch eine besonders hohe Akzeptanz bei Fleischfressern auszeichnet. Überraschenderweise wurde herausgefunden, dass das erfindungsgemäße Verfahren zu einer besonders weichen (soften) Textur des überwiegend fleischbasierten Futtermittelproduktes führt.

Unter einem überwiegend fleischbasierten Futtermittelprodukt wird ein Futtermittelprodukt verstanden, das einen Gehalt von wenigstens 20 Gew.-% an Fleisch bezogen auf das Gesamtgewicht des Futtermittel-Vorprodukts beziehungsweise des Futtermittelprodukts, enthält.

Unter "Fleisch" werden alle Fleischteile geschlachteter warmblütiger Landtiere, frisch oder durch ein geeignetes Verfahren haltbar gemacht, sowie alle zur Tierfutterverarbeitung zugelassenen Erzeugnisse aus der Verarbeitung von Tierkörpern von Landtieren, verstanden.

Der Fleischanteil im Futtermittel-Vorprodukt beziehungsweise im Futtermittelprodukt, liegt in einer vorteilhaften Ausführungsform zwischen 30 Gew.-% und 95 Gew.-%, insbesondere zwischen 40 Gew.-% und 80 Gew.-%, weiter insbesondere zwischen 60 Gew.-% und 70 Gew.-%. Diese Ausführungsform bietet den Vorteil, dass das überwiegend fleischbasierte Futtermittelprodukt von den Tieren besonders gern gefressen wird, wobei die Akzeptanz mit zunehmendem Fleischanteil weiter steigt.

In einer vorteilhaften Ausführungsform weisen die Zutaten zur Herstellung des Futtermittel-Vorprodukts eine Temperatur zwischen -18°C und +7°C auf. Diese Ausführungsform bietet den Vorteil, dass die Zeit, die zum Kuttern benötigt wird, bis das im Futtermittel-Vorprodukt befindliche Eiweiß aufgeschlagen ist (d.h. durch die Zerstörung der Zellmembranen werden die Proteine denaturiert) und ein gebundenes Futtermittel-Vorprodukt entsteht, lediglich etwa 5 bis 15 Minuten, wie etwa 5 bis 10 Minuten beträgt. Entsprechend ist das Verfahren besonders wirtschaftlich im Hinblick auf die aufzuwendende Zeit und Energie. Durch das Kuttern entsteht bei dieser Ausführungsform ein Futtermittel-Vorprodukt, dessen Temperatur bis zu etwa 15°C beträgt. Durch Verwendung des Kutters zur Zerkleinerung des Fleisches werden die Zellstrukturen, wie die Zellmembranen der Zellen, aufgebrochen und Proteine werden denaturiert. Ein Aufschlagen, wie das Aufschlagen von Eiweiß, tritt auf.

In einer vorteilhaften Ausführungsform erfolgt eine zusätzliche Kühlung, beispielsweise durch die Zugabe von Eis oder durch eine Kühlung des Kutters mittels Kühlelementen, so dass eine Temperatur von maximal etwa 5°C erreicht wird. Bei einer Temperatur von maximal etwa 5°C des entstehenden Futtermittel-Vorprodukts ist dieses in seiner Textur besonders homogen.

Unter "Kutter" und "kuttern" wird vorliegend verstanden, dass die im Kutter vorliegenden Bestandteile fein- und feinstverkleinert werden. Das heißt die Korngrößenverteilung liegt im Bereich von 10 mm bis 0,1 mm und kleiner. Das Kuttern zeichnet sich durch einen Prozess aus, bei dem bei möglichst vielen Zellen die Zellmembranen geschädigt werden, um so eine feine, gleichmäßige Masse zu erhalten. Dem Fachmann sind entsprechende "Kutter" oder engl. "Cutter" bekannt. Dabei werden die Messer mit einer Geschwindigkeit von mindestens 60 Umdrehungen pro Minute, wie z.B. mindestens 200 Umdrehungen pro Minute z.B. mindestens 2860 Umdrehungen pro Minute verwendet. So findet ein zumindest teilweises Denaturieren der Proteine während des Kutterns statt.

Unter Conchieren wird vorliegend verstanden ein Mischen, Trocknen, Kneten und Scheren sowie Verflüssigen der Masse. Conchieren ist ein von der Schokoladenindustrie speziell entwickeltes Mischverfahren, um einen gewissen Schmelz und Homogenität des Produktes zu erreichen. Also kein einfaches Rühren. Es wird in einer Rundconche conchiert, die in dem Behälter noch einen sich drehenden konischen Trichter enthält. Durch entsprechende Mischflügel wird bei einer Mischdauer von 3 - 30 Minuten und einer Temperatur von 15°C bis 50°C die gewünschte Endproduktqualität erreicht.

Der Feuchtigkeitsgehalt des Futtermittel-Vorprodukts kann vorteilhafterweise zwischen 40 Gew.-% und 50 Gew.-% liegen. Der Vorteil, ein Futtermittel-Vorprodukt mit diesem Feuchtigkeitsgehalt zwischen 40 Gew.-% und 50 Gew.-% einzusetzen, liegt darin, dass - wenn getrocknet werden muss - der Trocknungsschritt kurz gehalten werden kann, so dass die Nährstoffe im überwiegend fleischbasierten Futtermittel möglichst umfangreich erhalten bleiben können.

In einer anderen vorteilhaften Ausführungsform erfolgt die Trocknung des gegebenenfalls ausgeformten Futtermittel-Vorprodukts bis ein Feuchtigkeitsgehalt zwischen 5 Gew.-% und 40 Gew.-% erreicht ist, insbesondere bei einer Temperatur zwischen 50°C und 200°C. In dem Temperaturbereich zwischen 50°C und 200°C stehen die Zeit, die benötigt wird um einen Feuchtigkeitsgehalt zwischen 5 Gew.-% und 40 Gew.-% zu erreichen und die für die Trocknung aufzuwendende Energie in einem günstigen Verhältnis.

Auch kann die Trocknung des gegebenenfalls ausgeformten Futtermittel-Vorprodukts bis ein Feuchtigkeitsgehalt zwischen 5 Gew.-% und 40 Gew.-% erreicht ist vorteilhafterweise in einem Temperaturbereich zwischen 80°C und 90°C erfolgen. Überraschenderweise wurde gefunden, dass in diesem Temperaturbereich das Verhältnis zwischen wirtschaftlich günstiger Trocknung und Erhalt der Nährstoffe im erfindungsgemäßen überwiegend fleischbasierten Futtermittelprodukt am höchsten ist.

Das gegebenenfalls ausgeformte Futtermittel-Vorprodukt kann beispielsweise so weit getrocknet werden, bis das gegebenenfalls ausgeformte Futtermittel-Vorprodukt einen Feuchtigkeitsgehalt von etwa 10 Gew.-% bis 25 Gew.-%, insbesondere von etwa 12 Gew.-%, aufweist. Der sich im erfindungsgemäßen Verfahren anschließende Mahlvorgang ergibt bei einem Feuchtigkeitsgehalt des gegebenenfalls ausgeformten Futtermittel-Vorprodukts von etwa 12 Gew.-% ein besonders homogenes Mahlergebnis.

Wenn eine Ausformung erfolgt, kann diese durch Extrusion - also durch ein thermisches Verfahren, bei dem die Bestandteile eines Produkts durch schlagartiges Verdampfen des produkteigenen Wassers aufgeschlossen werden und durch gleichzeitiges Pressen durch eine Düse eine bestimmte Form erhaltenvonstatten gehen.

Grundsätzlich kann eine Ausformung auch nicht-thermisch erfolgen, wobei dann das Futtermittel-Vorprodukt bzw. die Futtermittelmasse einen Dampftunnel durchlaufen sollte.

In einer anderen vorteilhaften Ausführungsform erfolgt das Conchieren mit ein oder mehreren Bestandteilen der Gruppe Käse, Molkepulver, Sahnepulver, Leberwurst und/oder Fett. Vorteilhafterweise können unterschiedliche, auch tierartspezifische Geschmacksrichtungen des überwiegend fleischbasierten Futtermittel-Produkts erzeugt werden, wie beispielsweise die Geschmacksrichtungen Leberwurst, Geflügelfleisch, Käse etc.

Dabei wird in einer Ausführungsform das gegebenenfalls getrocknete Futtermittel-Vorprodukt in Form von Partikeln in die Conche gegeben zusammen mit den weiteren Bestandteilen mit Ausnahme des Fetts. Diese Mischung wird durchgemengt, bis die Temperatur in einem Bereich von 20°C bis 60°C liegt, z.B. in einem Bereich von 25°C bis 40°C, wie bei ca. 30°C. Anschließend wird das Fett, z.B. flüssiges Fett, wie flüssiges Palmfett hinzugefügt. Das Conchieren wird fortgesetzt, z.B. für mindestens 10 Minuten. Das Conchieren wird z.B. fortgesetzt, bis die Masse eine Temperatur von 30°C bis 60°C aufweist, z.B. in einem Bereich von 38°C bis 42°C.

In einer weiteren vorteilhaften Ausführungsform wird im Anschluss an das Conchieren das überwiegend fleischbasierte Futtermittelprodukt mittels eines Walzenformers ausgeformt. Überraschenderweise konnte nach dieser Art der Ausformung eine weitere Verbesserung der Akzeptanz des verfütterten Produkts beobachtet werden.

In einer anderen vorteilhaften Ausführungsform werden die Zutaten zur Herstellung des Futtermittel-Vorprodukts vollständig oder teilweise gefroren eingesetzt. Überraschenderweise konnte hier festgestellt werden, dass ein solches Futtermittel-Vorprodukt besonders kurze Zeiten des Conchierens im weiteren Verfahrensablauf benötigt und entsprechend besonders wirtschaftlich ist.

In einer weiteren vorteilhaften Ausführungsform werden die Zutaten zur Herstellung des Futtermittel-Vorprodukts vor dem Beschicken des Kutters mittels Führung durch eine oder mehrere Lochscheiben zerkleinert. Es hat sich vorliegend gezeigt, dass eine Zerkleinerung vor dem Vorgang des Kutterns zu einer homogeneren Futtermittel-Vormischung führt und in Folge dessen der Vorgang des Kutterns nicht übermäßig ausgedehnt werden muss, sodass die tierischen Proteine bestmöglich erhalten bleiben.

In einer anderen vorteilhaften Ausführungsform werden den Zutaten zur Herstellung des Futtermittel-Vorprodukts vor dem Kuttern Gemüse und/oder Getreide und/oder Kartoffeln und/oder Glycerin zugesetzt. Diese weiteren Futterbestandteile dienen einer besseren technischen Verarbeitung des Futters, in dem Sinne, dass das Futtermittel-Vorprodukt leichter zu verarbeiten ist, da es weniger klebt. Überraschenderweise wurde gefunden, dass die Klebrigkeit des Futtermittel-Vorprodukts dadurch gesenkt werden kann, dass die genannten weiteren Futterbestandteile vor dem Vorgang des Kutterns den Zutaten zur Herstellung des Futtermittel-Vorprodukts zugesetzt werden.

In einer anderen vorteilhaften Ausführungsform werden beim Conchieren Zusatzstoffe, die in der Futtermittelindustrie üblich sind, beigefügt. Insbesondere handelt es sich dabei um Aromen, natürliche oder synthetische Farbstoffe, inaktivierte Hefen oder Hefeextrakte, Pflanzenextrakte und/oder -konzentrate, Konservierungsstoffe, Zucker und/oder funktionelle Zutaten. Unter funktionellen Zutaten werden beispielsweise Probiotika, aber auch Vitamine, Mineralstoffe, Omega-3-Fettsäuren, probiotische Ballaststoffe und probiotische Mikroorganismen verstanden. Wenn beim Conchieren Fett zugegeben wird, erfolgt die Zugabe der genannten Zusatzstoffe - falls diese zugegeben werden - vor der Zugabe des Fettes.

Im Verfahren können Konservierungsstoffe, wie Kaliumsorbat, eingesetzt werden. Beispielsweise kann Kaliumsorbat in einer Konzentration zwischen 0,1 Gew.-% und 1 Gew.-% bezogen auf das Gesamtgewicht des Futtermittel-Vorprodukts eingesetzt werden. Eine Zugabe von Kaliumsorbat in einer Menge von etwa 0,5 Gew.-% bezogen auf das Gesamtgewicht des Futtermittel-Vorprodukts führt zu einer Mindesthaltbarkeit des erfindungsgemäßen überwiegend fleischbasierten Futtermittelprodukts von etwa 15 bis 18 Monaten.

Vorteilhafterweise brauchen keine Bindemittel, wie beispielsweise Carragen, Gelatine, Agar-Agar oder Pektin eingesetzt zu werden. Auch Milchprodukte beziehungsweise deren Eiweiß müssen nicht zugesetzt werden. Dies ist im Hinblick auf mögliche Unverträglichkeiten gegenüber Milchprodukten beziehungsweise Milcheiweiß von Vorteil.

Das erfindungsgemäße überwiegend fleischbasierte Futtermittelprodukt ist durch das erfindungsgemäße Verfahren erhältlich.

In einer vorteilhaften Ausführungsform weist das erfindungsgemäß hergestellte überwiegend fleischbasierte Futtermittelprodukt eine Druckfestigkeit zwischen 235 kPa und 309 kPa, insbesondere um die 271 kPa auf. Diese Druckfestigkeit ist Ausdruck einer besonders weichen Textur, die zu einer entsprechenden Haptik führt.

Für die Prüfung der Druckfestigkeit wurde die Kraft bestimmt, die erforderlich ist, einen Zylinder mit einem Durchmesser von 20mm in die Probe einzudrücken, wobei die Deformation der zu testenden Probe 50% der Probenhöhe betrug. Die Druckfestigkeit der Probe wurde aus der ermittelten Maximalkraft und der einwirkenden Zylinderfläche bestimmt, wobei nur Proben mit einem Durchmesser größer 15 mm vermessen wurden. Die Messung erfolgte bei 20°C und einer rel. Luftfeuchtigkeit von 55%. Das Probestück war dabei ein ausgeformter Drops mit einem Durchmesser von ca. 20 mm und einer Höhe von 10 bis 14 mm.

Das erfindungsgemäße fleischbasierte Futtermittelprodukt weist vorteilhafterweise einen Fettgehalt zwischen 5 Gew.-% und 70 Gew.-%, einen Proteingehalt zwischen 10 Gew.-% und 50 Gew.-%, einen Aschegehalt zwischen 2 Gew.-% und 20 Gew.-% sowie einen pH-Wert zwischen 5 und 6,5 auf. Der Effekt dieser Zusammensetzung liegt darin, dass ein solches überwiegend fleischbasiertes Futtermittelprodukt ernährungsphysiologisch für fleischfressende Tiere besonders günstig ist.

In einer vorteilhaften Ausführungsform weist das erfindungsgemäße überwiegend fleischbasierte Futtermittelprodukt einen Feuchtigkeitsgehalt zwischen 2 Gew.-% und 35 Gew.-%, insbesondere zwischen 4 Gew.-% und 10 Gew.-% (trockenes Futtermittelprodukt) oder 15 Gew.-% bis 30 Gew.-% (halbfeuchtes Futtermittelprodukt) auf. Vorteil eines solchen trockenen beziehungsweise halbfeuchten Futtermittelproduktes ist es, dass dieses bei hoher Akzeptanz der Tiere, für die das überwiegend fleischbasierte Futtermittelprodukt gedacht ist, auch für denjenigen, der das Futter verabreicht, besonders praktisch zu handhaben ist. Insbesondere weisen erfindungsgemäße, überwiegend fleischbasierte Futtermittelprodukte mit einem Feuchtigkeitsgehalt von etwa 12 Gew.-%, eine besonders akzeptierte Textur auf.

Das erfindungsgemäße überwiegend fleischbasierte Futtermittelprodukt kann in stückiger Form vorliegen beziehungsweise erzeugt werden.

In einer weiteren vorteilhaften Ausführungsform ist das erfindungsgemäße überwiegend fleischbasierte Futtermittelprodukt in bissengroßer Form ausgeformt. Überraschenderweise wurde gefunden, dass die besondere "Softigkeit" des erfindungsgemäßen überwiegend fleischbasierten Futtermittelprodukts einer bissengroßen Darreichungsform besonders entgegen kommt. Die bissengroße Darreichungsform kann insbesondere die Form der im Stand der Technik bekannten Drops, z.B. ähnlich einem gegebenenfalls einseitig platten Tropfen, aufweisen. Andere Formen, wie beispielsweise Sterne, Herzen usw., sind ebenfalls vorteilhaft, da sie im Jahresablauf zu bestimmten Zeiten von Tierhaltern besonders akzeptiert werden.

In einer anderen vorteilhaften Ausführungsform ist das überwiegend fleischbasierte Futtermittelprodukt in einer Folienverpackung, insbesondere in einer Schlauchbeutelverpackung, einem Standbodenbeutel, einer Muldenschalenverpackung oder in einer Dose eingeschlossen. Diese Ausführungsform bietet den Vorteil, dass der verfahrenstechnisch bedingte und die Textur des überwiegend fleischbasierten Futtermittelprodukts bedingende Feuchtigkeitsgehalt über die beabsichtigte Mindesthaltbarkeitsdauer des Produktes erhalten werden kann.

Mit dem vorstehend beschriebenen Verfahren wird ein neues überwiegend fleischbasiertes Futtermittelprodukt erhalten, das zu mindestens 20 Gew.-%, insbesondere zwischen 30 Gew.-% und 95 Gew.-%, weiter insbesondere zwischen 40 Gew.-% und 80 Gew.-%, zum Beispiel zwischen 60 Gew.-% und 70 Gew.-% bezogen auf das Gesamtgewicht des Futtermittel-Vorprodukts bzw. bezogen auf das fleischbasierte Futtermittelprodukt ausschließlich aus Fleisch, beispielsweise auch getrocknetem - gegebenenfalls zu Mehl vermahlenem Fleisch - besteht.

Das erfindungsgemäße überwiegend fleischbasierte Futtermittelprodukt kann mit natürlichen Farbstoffen ein- oder mehrfarbig eingefärbt sein. Es hat sich gezeigt, dass diese Maßnahme die Akzeptanz des Produkts beim Tierhalter weiter erhöht.

Das erfindungsgemäße überwiegend fleischbasierte Futtermittelprodukt kann außerdem mit anderen Futtermittelprodukten in Verkaufseinheiten vereint oder als gemischtes Futtermittel angeboten werden. Es kann vorteilhafterweise als Katzenfutter, Hundefutter oder Futter für andere fleischfressende Haustiere in Form von Vollfutter oder von Snacks angeboten werden.

Im Folgenden wird die Erfindung anhand eines Ausführungsbeispiels näher beschrieben, das lediglich zur Veranschaulichung einer möglichen Ausführungsform dient und in keiner Weise schutzbeschränkend sein soll.

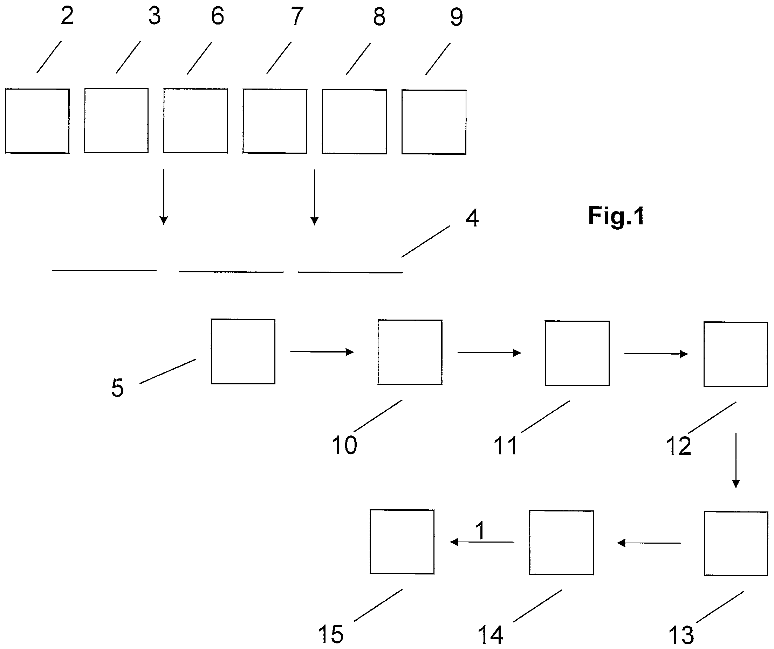

Die einzige Figur 1 zeigt eine schematische Darstellung zur Herstellung eines erfindungsgemäßen überwiegend fleischbasierten Futtermittelprodukts. Zunächst werden die Zutaten der Gruppe "Fleisch" in den Kutter 5 gegeben. Diese Zutaten befinden sich in den Behältern 2 und ggf. 3 (falls getrennte Behälter z.B. für Fleisch unterschiedlicher Tierarten vorgesehen sind) und werden von dort dem Kutter 5 zugeführt. Daneben befinden sich in weiteren Behältern Gemüse 6 beziehungsweise Getreide 7 beziehungsweise Kartoffeln 8 beziehungsweise Glycerin 9, die den fleischigen Zutaten zugesetzt werden können. Mit 4 sind Lochscheiben bezeichnet, die dem Kutter 5 vorgeschaltet sind und zur Zerkleinerung zumindest der fleischigen Zutaten zur Herstellung des Futtermittelvorprodukts dienen. Nach dem Kutter 5 gelangt das Futtermittel-Vorprodukt zur Extrusion in einen Extruder 10. Vom Extruder 10 wird das ausgeformte Futtermittel-Vorprodukt in einen Trockner geleitet, der mit 11 bezeichnet ist. Daran schließt sich eine Mühle 12 an, die beispielsweise die extrudierten getrockneten Stangen des Futtermittel-Vorprodukts zu Partikeln mit einer durchschnittlichen Größe von 0,5 mm bis 8 mm zermahlt. Beispielsweise über ein Rohr wird das partikelförmige getrocknete Futtermittel-Vorprodukt in eine Conche 13 eingetragen wobei weitere Behältnisse beispielsweise für Käse und Leberwurst vorgesehen sind, deren Inhalt über Zuläufe in die Conche 13 gelangen kann (die weiteren Behältnisse und deren Zulauf sind in Fig.1 nicht dargestellt). Ein weiterer Zulauf besteht für die Zufuhr von Fett (ebenfalls in Fig.1 nicht dargestellt). Im Anschluss an die Conche 13 kann ein zweiter Extruder 14 vorgesehen sein. Mit Hilfe entsprechender Düsen ist die Erzielung geformter erfindungsgemäßer überwiegend fleischbasierter Futtermittelprodukte 1 - z.B. als Drops, Herz oder Stern - möglich. Die Größe der überwiegend fleischbasierten Futtermittelprodukte 1 wird so gewählt, dass sie durch die jeweilige fleischfressende Tierart optimal aufgenommen werden können, beispielsweise beträgt der Durchmesser für Katzen-Drops etwa 1 cm, während er für Hunde etwa 2 bis 4 cm betragen kann. Das Endprodukt, also das überwiegend fleischbasierte Futtermittelprodukt 1 wird nach Verlassen des Extruders noch Bearbeitungs- und/oder Abpackeinheiten, hier pauschal mit 15 bezeichnet, zugeführt.

## Patentansprüche

1. Verfahren zur Herstellung eines überwiegend fleischbasierten Futtermittelprodukts (1), wie mit einem Gehalt von wenigstens 20 Gew.-% Fleisch bezogen auf das Gesamtgewicht des Futtermittelprodukts, **dadurch gekennzeichnet, dass**
a. ein Kutter (5) zur Herstellung eines Futtermittel-Vorprodukts mit wenigstens folgenden Zutaten beschickt wird, die eine Temperatur aufweisen, die gleich oder geringer ist als + 25°C: wenigstens ein Bestandteil der Gruppe Fleisch,
b. die Zutaten zu einem Futtermittel-Vorprodukt mit einem Feuchtigkeits-Gehalt zwischen 30 Gew.-% und 60 Gew.-% gekuttert werden,
c. gegebenenfalls das Futtermittel-Vorprodukt getrocknet wird, bis ein Feuchtigkeitsgehalt zwischen 5 Gew.-% und 40 Gew.-% erreicht ist,
d. das gegebenenfalls getrocknete Futtermittel-Vorprodukt zu Partikeln mit einer Größe zwischen 0,5 mm und 8 mm ausgebildet wird,
e. die Partikel des gegebenenfalls getrockneten Futtermittel-Vorprodukts zu einer Futtermittelmasse conchiert werden, gegebenenfalls mit einem oder mehreren Bestandteilen der Gruppe Käse, Molkepulver, Sahnepulver, Leberwurst und/oder Fett,
f. die Futtermittelmasse zum überwiegend fleischbasierten Futtermittelprodukt (1) ausgeformt und gegebenenfalls auf eine Temperatur zwischen 1°C und 25°C abgekühlt wird.

2. Verfahren nach Anspruch 1, wobei das Futtermittel-Vorprodukt nach dem Schritt b.) ausgeformt wird, insbesondere durch Extrusion ausgeformt wird.

3. Verfahren nach Anspruch 1 oder 2, wobei die Partikel in Schritt d.) durch Zerkleinern des Futtermittel-Vorprodukts erhalten sind.

4. Verfahren nach einem der vorhergehenden Ansprüche 1, **dadurch gekennzeichnet, dass** im Anschluss an das Conchieren das fleischbasierte Futtermittelprodukt (1) mittels eines Walzenformers ausgeformt wird.

5. Verfahren nach einem der vorhergehenden Ansprüche, **dadurch gekennzeichnet, dass** die Zutaten zur Herstellung des Futtermittel-Vorprodukts vollständig oder teilweise gefroren eingesetzt werden.

6. Verfahren nach einem der vorhergehenden Ansprüche, **dadurch gekennzeichnet, dass** den Zutaten zur Herstellung des Futtermittel-Vorprodukts vor dem Kuttern Gemüse und/oder Getreide und/oder Kartoffeln und/oder Glycerin zugesetzt wird.

7. Verfahren nach einem der vorhergehenden Ansprüche, **dadurch gekennzeichnet, dass** beim Conchieren, falls Fett zugegeben wird, vor der Zugabe des Fettes, in der Futtermittelindustrie übliche Zusatzstoffe beigefügt werden, insbesondere Aromen, natürliche oder synthetische Farbstoffe, inaktivierte Hefe oder Hefeextrakte, Pflanzenextrakte und/oder -konzentrate, Konservierungsstoffe, Zucker und/oder funktionelle Zutaten.

8. Überwiegend fleischbasiertes Futtermittelprodukt (1) erhältlich durch ein Verfahren nach einem der Ansprüche 1 bis 7, insbesondere das eine Druckfestigkeit zwischen 235 kPa und 309 kPa aufweist.

9. Überwiegend fleischbasiertes Futtermittelprodukt (1) nach Anspruch 9, **dadurch gekennzeichnet, dass** es einen Fettgehalt zwischen 5 Gew.-% und 70 Gew.-%, einen Proteingehalt zwischen 10 Gew.-% und 50 Gew.-%, einen Aschegehalt zwischen 2 Gew.-% und 20 Gew.-% sowie einen pH-Wert zwischen 5 und 6,5 aufweist.

10. Überwiegend fleischbasiertes Futtermittelprodukt (1) nach einem der Ansprüche 8 bis 9, **dadurch gekennzeichnet, dass** es einen Feuchtigkeitsgehalt zwischen 2 Gew.-% und 35 Gew.-% aufweist.

11. Überwiegend fleischbasiertes Futtermittelprodukt (1) nach einem der Ansprüche 8 bis 10, **dadurch gekennzeichnet, dass** es in stückiger Form ausgeformt ist.

12. Überwiegend fleischbasiertes Futtermittelprodukt (1) nach einem der Ansprüche 8 bis 11, **dadurch gekennzeichnet, dass** es in bissengroßen Stücken ausgeformt ist.

13. Überwiegend fleischbasiertes Futtermittelprodukt (1) nach einem der Ansprüche 8 bis 12, **dadurch gekennzeichnet, dass** es in Form von Drops, Sternen oder Herzen ausgeformt ist.

14. Überwiegend fleischbasiertes Futtermittelprodukt (1) nach einem der Ansprüche 8 bis 13, **dadurch gekennzeichnet, dass** es in einer Folienverpackung eingeschlossen ist.

15. Überwiegend fleischbasiertes Futtermittelprodukt (1) nach einem der Ansprüche 8 bis 14, **dadurch gekennzeichnet, dass** es in einer Schlauchbeutelverpackung, einem Standbodenbeutel, einer Muldenschalenverpackung oder einer Dose eingeschlossen ist.

## Claims

1. Method for producing a predominantly meat-based animal feed product (1), like with a content of at least 20 wt% meat relative to the total weight of the animal feed product, **characterized in that**
a. a cutter (5) for producing an animal feed precursor is charged with at least the following ingredients, which have a temperature equal to or lower than + 25°C: at least one component of the meat group,
b. the ingredients are minced to form a feed precursor with a moisture content of 30 wt% to 60 wt%,
c. optionally, the feed precursor is dried until a moisture content of 5 wt% to 40 wt% is reached,
d. the optionally dried feed precursor is shaped into particles between 0.5 mm and 8 mm in size,
e. the particles of the optionally dried feed precursor are conched into an animal feed mass, optionally with one or a plurality of components of the group cheese, milk powder, cream powder, liver sausage, and/or fat, and
f. the animal feed mass is shaped into a predominantly meat-based animal feed product (1) and optionally cooled to a temperature of between 1°C and 25°C.

2. Method according to claim 1, wherein the feed precursor according to step b.) is shaped, particularly by extrusion.

3. Method according to claims 1 or 2, wherein the particles in step d.) are obtained by crushing of the feed precursor.

4. Method according to one of the previous claims 1, **characterized in that** after conching, the meat-based animal feed product (1) is shaped by means of a roller former.

5. Method according to one of the previous claims, **characterized in that** the ingredients for producing the feed precursor are used in completely or partially frozen form.

6. Method according to one of the previous claims, **characterized in that** vegetables and/or cereal and/or potatoes and/or glycerol are added to the ingredients for producing the feed precursor before mincing.

7. Method according to one of the previous claims, **characterized in that** if fat is added in conching, before adding said fat, additives commonly used in the animal feed industry are added, particularly flavoring agents, natural or synthetic dyes, inactivated yeast or yeast extracts, plant extracts and/or concentrates, preservatives, sugars, and/or functional ingredients.

8. Predominantly meat-based animal feed product (1) obtainable by a method according to one of claims 1 through 7, particularly, having a compressive strength of between 235 kPa and 309 kPa.

9. Predominantly meat-based animal feed product (1) according to claim 8, **characterized in that** said product has a fat content of between 5 wt% and 70 wt%, a protein content of between 10 wt% and 50 wt%, an ash content of between 2 wt% and 20 wt%, and a pH of between 5 and 6.5.

10. Predominantly meat-based animal feed product (1) according to one of claims 8 through 9, **characterized in that** said product has a moisture content of between 2 wt% and 35 wt%.

11. Predominantly meat-based animal feed product (1) according to one of claims 8 through 10, **characterized in that** said product is shaped into pieces.

12. Predominantly meat-based animal feed product (1) according to one of claims 8 through 11, **characterized in that** said product is shaped into bite-sized pieces.

13. Predominantly meat-based animal feed product (1) according to one of claims 8 through 12, **characterized in that** said product is shaped into drops, stars, or hearts.

14. Predominantly meat-based animal feed product (1) according to one of claims 8 through 13, **characterized in that** said product is sealed in a foil package.

15. Predominantly meat-based animal feed product (1) according to one of claims 8 through 14, **characterized in that** said product is sealed in a tubular bag package, a stand-up pouch, a hollow shell package, or a can.

## Revendications

1. Procédé de fabrication d'un produit aliment pour animaux essentiellement à base de viande (1), ayant par exemple une teneur d'au moins 20 % en poids en viande par rapport au poids total du produit aliment pour animaux, **caractérisé en ce que**
a. un appareil de coupe (5) pour la fabrication d'un produit précurseur d'aliment pour animaux est alimenté avec au moins les ingrédients suivants, qui présentent une température qui est inférieure ou égale à +25 °C : au moins un constituant du groupe de la viande,
b. les ingrédients sont découpés en un produit précurseur d'aliment pour animaux ayant un teneur en humidité comprise entre 30 % en poids et 60 % en poids,
c. le produit précurseur d'aliment pour animaux est éventuellement séché jusqu'à atteindre une teneur en humidité comprise entre 5 % en poids et 40 % en poids,
d. le produit précurseur d'aliment pour animaux éventuellement séché est mis sous la forme de particules ayant une taille comprise entre 0,5 mm et 8 mm,
e. les particules du produit précurseur d'aliment pour animaux éventuellement séché sont conchées en une masse d'aliment pour animaux, éventuellement avec un ou plusieurs constituants du groupe constitué par le fromage, la poudre de lactosérum, la crème en poudre, le saucisson de pâté de foie et/ou une matière grasse,
f. la masse d'aliment pour animaux est façonnée pour former le produit aliment pour animaux essentiellement à base de viande (1) et éventuellement refroidie à une température comprise entre 1 °C et 25 °C.

2. Procédé selon la revendication 1, dans lequel le produit précurseur d'aliment pour animaux est façonné après l'étape b), notamment façonné par extrusion.

3. Procédé selon la revendication 1 ou 2, dans lequel les particules sont obtenues à l'étape d) par broyage du produit précurseur d'aliment pour animaux.

4. Procédé selon l'une quelconque des revendications précédentes, **caractérisé en ce qu'**après le conchage, le produit aliment pour animaux à base de viande (1) est façonné au moyen d'un dispositif de façonnage à rouleau.

5. Procédé selon l'une quelconque des revendications précédentes, **caractérisé en ce que** les ingrédients pour la fabrication du produit précurseur d'aliment pour animaux sont utilisés sous forme entièrement ou partiellement congelée.

6. Procédé selon l'une quelconque des revendications précédentes, **caractérisé en ce que** des légumes et/ou des céréales et/ou des pommes de terre et/ou de la glycérine sont ajoutés aux ingrédients pour la fabrication du produit précurseur d'aliment pour animaux avant la découpe.

7. Procédé selon l'une quelconque des revendications précédentes, **caractérisé en ce que**, lors du conchage, si une matière grasse est ajoutée, avant l'ajout de la matière grasse, des additifs usuels dans l'industrie des aliments pour animaux sont ajoutés, notamment des arômes, des colorants naturels ou synthétiques, des levures inactivées ou des extraits de levure, des extraits et/ou concentrés de plantes, des conservateurs, du sucre et/ou des ingrédients fonctionnels.

8. Produit aliment pour animaux essentiellement à base de viande (1), pouvant être obtenu par un procédé selon l'une quelconque des revendications 1 à 7, notamment qui présente une résistance à la compression comprise entre 235 kPa et 309 kPa.

9. Produit aliment pour animaux essentiellement à base de viande (1) selon la revendication 8, **caractérisé en ce qu'**il présente une teneur en matières grasses comprise entre 5 % en poids et 70 % en poids, une teneur en protéines comprise entre 10 % en poids et 50 % en poids, une teneur en cendres comprise entre 2 % en poids et 20 % en poids, et un pH compris entre 5 et 6,5.

10. Produit aliment pour animaux essentiellement à base de viande (1) selon l'une quelconque des revendications 8 à 9, **caractérisé en ce qu'**il présente une teneur en humidité comprise entre 2 % en poids et 35 % en poids.

11. Produit aliment pour animaux essentiellement à base de viande (1) selon l'une quelconque des revendications 8 à 10, **caractérisé en ce qu'**il est façonné sous la forme de morceaux.

12. Produit aliment pour animaux essentiellement à base de viande (1) selon l'une quelconque des revendications 8 à 11, **caractérisé en ce qu'**il est façonné sous la forme de morceaux de la taille d'une bouchée.

13. Produit aliment pour animaux essentiellement à base de viande (1) selon l'une quelconque des revendications 8 à 12, **caractérisé en ce qu'**il est façonné sous la forme de gouttes, d'étoiles ou de coeurs.

14. Produit aliment pour animaux essentiellement à base de viande (1) selon l'une quelconque des revendications 8 à 13, **caractérisé en ce qu'**il est enfermé dans un emballage sous film.

15. Produit aliment pour animaux essentiellement à base de viande (1) selon l'une quelconque des revendications 8 à 14, **caractérisé en ce qu'**il est enfermé dans un emballage en forme de sachet tubulaire, un sachet à fond plat, un emballage à coque creuse ou une boîte.
